# EUROPÄISCHE PATENTSCHRIFT

(11) **EP 0 681 644 B1**
(45) Veröffentlichungstag und Bekanntmachung des Hinweises auf die Patenterteilung: **16.07.1997**
(21) Anmeldenummer: 95900744.4
(22) Anmeldetag: 15.11.1994
(51) Int. Cl.: F01N 3/20

(54) **MEHRFLUTIGE BRENNKRAFTMASCHINEN-ABGASANLAGE MIT EINEM BRENNER**
MULTIPLE INTERNAL COMBUSTION ENGINE EXHAUST SYSTEM WITH A BURNER
SYSTEME D'ECHAPPEMENT MULTIPLE MUNI D'UN BRULEUR POUR MOTEUR A COMBUSTION INTERNE

(30) Priorität: 29.11.1993 DE 4340613
(43) Veröffentlichungstag der Anmeldung: 15.11.1995
(73) Patentinhaber: Bayerische Motoren Werke Aktiengesellschaft, 80788 München (DE)
(72) Erfinder: Missy, Stephan, D-85298 Scheyern (DE)
(86) Internationale Anmeldenummer: EP9403789
(87) Internationale Veröffentlichungsnummer: WO9514852

(56) Entgegenhaltungen:
- EP-A- 0 292 688
- WO-A-89/03928
- DE-A- 4 208 624

## Beschreibung

Die Erfindung betrifft eine mehrflutige Abgasanlage einer Brennkraftmaschine mit zumindest zwei Katalysatoreinheiten sowie einem Brenner, dessen Abluft den Katalysatoreinheiten über Rohrleitungen zuführbar ist.
Eine einflutige Abgasanlage mit einer Katalysatoreinheit sowie mit einem dieser vorgeschalteten Brenner zeigt die DE 42 08 624. Dabei dient der Brenner dazu, den Abgaskatalysator im Zusammenhang mit einem Kaltstart der Brennkraftmaschine schnell auf seine Betriebstemperatur zu bringen. Bei einflutigen Abgas- bzw. Katalysatoranlagen, wie sie insbesondere bei Reihen-Vierzylinder- und meist auch bei Reihen-Sechszylinder-Brennkraftmaschinen vorhanden sind, ist dieses bekannte Konzept sinnvoll und konstruktiv einfach zu realiseren. Eine direkte Übertragung dieses Konzeptes auf zweiflutige Abgasanlagen, wie sie insbesondere bei Brennkraftmaschinen der V-Bauart üblich sind, erzwingt jedoch die Verwendung von zwei Brennern, was einen erheblichen Bauaufwand bedeutet. Der Übergang auf einflutige Abgasanlagen beispielsweise für Brennkraftmaschinen der V-Bauart ist jedoch ebenfalls nicht empfehlenswert, da sich damit entweder Nachteile in der Ladungswechseldynamik bzw. Drehmomentcharakteristik einstellen können, oder eine derartige einflutige Abgasanlage schon allein aufgrund der Bauraumsituation ausgeschlossen ist.

Aufgabe der Erfindung ist es daher, ein einfaches und sicheres Brennerkonzept für eine mehrflutige Abgasanlage aufzuzeigen.
Zur Lösung dieser Aufgabe ist vorgesehen, daß der Brenner zumindest zwei Katalysatoreinheiten mit Brenner-Abluft versorgt, und die vom Brenner zu den Katalysatoreinheiten führenden Rohrleitungen zumindest bei Brennerstillstand nicht miteinander in Verbindung stehen. Vorteilhafte Aus- und Weiterbildungen sind in den Unteransprüchen aufgelistet.

Erfindungsgemäß wird für eine zweiflutige oder auch mehrflutige Abgasanlage mit voneinander getrennten Katalysatoreinheiten ein zentraler Brenner vorgesehen, dessen Brenner-Abluft auf die jeweiligen Katalysatoreinheiten aufgeteilt wird. Damit sind jedoch die einzelnen Katalysatoreinheiten über das die Brenner-Abluft führende Rohrleitungssystem miteinander verbunden. Dies wiederum ist unerwünscht bzw. unter Berücksichtigung gewisser länderspezifischer Vorschriften nicht zulässig. So existieren beispielsweise gesetzliche Regelungen, die vorschreiben, daß Abgaskatalysatoren von Brennkraftmaschinen mit Hilfe einer sog. Monitor-Lambda-Sonde kontinuierlich zu überprüfen sind. Sind nun in einer beispielsweise zweiflutigen Abgasanlage zwei separate Katalysatoreinheiten vorgesehen, denen jeweils eine separate Lambda-Regelsonde vorgeschaltet sowie jeweils eine separate Monitorsonde nachgeschaltet ist, so ist eine schlüssige Auswertung der Signale der Monitorsonden nur dann möglich, wenn stromauf dieser Monitorsonden keine Verbindung zwischen den beiden Fluten der Abgasanlage möglich ist. Es muß somit ausgeschlossen werden, daß ein Abgasteilstrom beispielsweise von der linken Flut in die rechte Flut gelangt oder umgekehrt. Erfindungsgemäß stehen deshalb zumindest bei Brennerstillstand die vom Brenner zu den Katalysatoreinheiten führenden Rohrleitungen nicht in Verbindung miteinander. Die Überprüfung der Katalysatoreinheiten unter Auswertung der Signale der Monitor-Sonden erfolgt nämlich nur außerhalb der Brenner-Betriebszeit, so daß dann, nämlich bei Brenner-Stillstand, dafür Sorge zu tragen ist, daß dann die einzelnen Fluten der mehrflutigen Abgasanlage zumindest stromauf der Monitor-Sonden nicht miteinander verbunden sind. Insbesondere sind daher dann die vom gemeinsamen Brenner zu den einzelnen Katalysatoreinheiten führenden Rohrleitungen voneinander trennbar.

Von einem zentralen Brennerausgang können separate Rohrleitungen zu den Katalysatoreinheiten führen, um diese mit Brenner-Abluft zu versorgen, es ist jedoch auch möglich, daß vom Brenner eine einzige Rohrleitung wegführt, die sich später in einzelne Zweige aufteilt. In allen diesen Fällen werden ohne zusätzliche Maßnahmen die einzelnen Fluten der mehrflutigen Abgasanlage über die die Brenner-Abluft führenden Rohrleitungen miteinander verbunden. Um die erfindungsgemäß gewünschte Trennung zu ermöglichen, kann somit in zumindest einer von zwei Rohrleitungen ein schaltbares Absperrorgan vorgesehen sein, es ist jedoch auch möglich, in jeder der Rohrleitungen ein separates Absperrorgan, das beispielsweise als Absperrklappe ausgebildet sein kann, vorzusehen. Bevorzugt wird das Absperrorgan bzw. die Absperrklappe dabei von einer zentralen Steuerungselektronik, in der auch die Signale der Lambda-Sonden und Monitor-Sonden etc. verarbeitet werden, angesteuert. Ist dabei in jeder der vom Brenner zu den Katalysatoreinheiten führenden Rohrleitungen ein Absperrorgan vorgesehen, so ist es selbstverständlich auch möglich, nur einzelne dieser Absperrorgane zu schließen, wenn dies beispielsweise aus funktionalen Gründen erwünscht oder erforderlich ist.

In einer alternativen Ausführungsform der Erfindung können in den vom Brenner zu den Katalysatoreinheiten führenden Rohrleitungen jedoch auch Rückschlagventil-Vorrichtungen vorgesehen sein. Derartige Rückschlagventile erlauben es zwar dem Brennerabgas, zu den Katalysatoreinheiten zu gelangen, verhindern jedoch gleichzeitig einen übertritt des Abgases von der einen Flut der mehrflutigen Abgasanlage in die andere Flut. Selbstverständlich lassen sich auch schaltbare Absperrorgane mit derartigen Rückschlagventil-Vorrichtungen kombinieren.

Ein bevorzugtes Ausführungsbeispiel der Erfindung mit einer zweiflutigen Abgasanlage, bei der in jeder Rohrleitung eine separat betätigbare Absperrklappe vorgesehen ist, ist in der beigefügten Prinzipskizze dargestellt und wird im folgenden kurz erläutert.
Die erste Flut einer zweiflutigen Abgasanlage ist mit der Bezugsziffer la, die zweite Flut mit der Bezugsziffer 1b versehen. Jede Flut 1a, 1b schließt sich mit ihren Vorrohren 2a, 2b jeweils an einen nicht gezeigten Abgaskrümmer einer ebenfalls nicht gezeigten Brennkraftmaschine der V-Bauart an. In jedem Vorrohr 2a, 2b ist jeweils eine Lambda-Sonde 3a, 3b stromauf einer Katalysatoreinheit 4a, 4b vorgesehen, in der sich auch jeweils eine Monitor-Sonde 5a, 5b befindet. Nicht gezeigt ist der weitere Verlauf der beiden Fluten 1a, 1b, in denen jeweils noch Schalldämpfer-Baugruppen angeordnet sind, ehe diese mehrflutige Abgasanlage ggf. getrennt in die Umgebung mündet.

Es ist ein Brenner 6 vorgesehen, dessen Brenner-Abluft über Rohrleitungen 7a, 7b, die sich an den Brennerausgang anschließen, in die Katalysatoreinheiten 4a, 4b der ersten und zweiten Flut 1a, 1b einleitbar ist. In jeder der beiden Rohrleitungen 7a, 7b ist jeweils ein Absperrorgan 8a, 8b in Form einer Absperrklappe vorgesehen. Befinden sich die Absperrklappen bzw. Absperrorgane 8a, 8b in der gezeigten Position, so kann zwar keine Brenner-Abluft in die Katalysatoreinheiten 4a, 4b gelangen, gleichzeitig sind jedoch die beiden Rohrleitungen 7a, 7b voneinander getrennt, so daß ein Übertritt von Abgas aus der ersten Flut la in die zweite Flut 1b oder umgekehrt ausgeschlossen ist. Die gezeigte Position stellt somit den Zustand bei betriebswarmer Brennkraftmaschine bzw. betriebsbereiten Katalysatoreinheiten 4a, 4b dar. Wie eingangs erläutert soll in diesem Zustand bei Brennerstillstand jeglicher Abgasübertritt von einer Flut in die andere (von 1b zu 1a bzw. umgekehrt) ausgeschlossen sein. Wird hingegen in Verbindung mit einem Kaltstart der Brennkraftmaschine der Brenner 6 betrieben, um die Katalysatoreinheiten 4a, 4b schnell auf ihre Betriebstemperatur zu bringen, so werden selbstverständlich die Absperrorgane 8a, 8b geöffnet, so daß die Brenner-Abluft ungehindert über die Rohrleitungen 7a, 7b zu den beiden Katalysatoreinheiten 4a, 4b gelangen und diese damit aufwärmen kann.

Selbstverständlich ist der Brenner 6 mit einer Brennluftversorgung versehen sowie an die Kraftstoffversorgung der Brennkraftmaschine angekoppelt, wie dies aus dem Stand der Technik bekannt ist. Hierzu können in der Peripherie des Brenners 6 wie bekannt Druckregler, Abschaltventile, Zündelemente, Temperatursensoren und dgl. vorgesehen sein. Ferner handelt es sich bei den gezeigten Katalysatoreinheiten 4a, 4b um Baugruppen mit jeweils drei hintereinander geschalteten Monolithen 9, 9', 9", wobei die Rohrleitungen 7a, 7b für die Brenner-Abluft jeweils zwischen dem ersten Monolithen 9 sowie dem zweiten Monolithen 9' münden und die Monitor-Sonde 5a, 5b jeweils zwischen dem zweiten Monolithen 9' sowie dem dritten Monolithen 9" vorgesehen ist. Jedoch kann dies sowie weitere Details durchaus abweichend vom gezeigten Ausführungsbeispiel gestaltet sein, ohne den Inhalt der Patentansprüche zu verlassen.

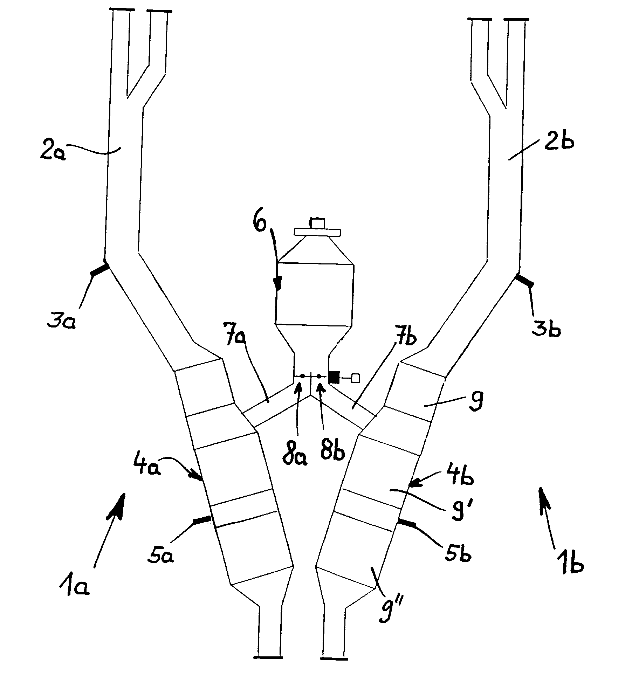

## Patentansprüche

1. Mehrflutige Abgasanlage einer Brennkraftmaschine mit zumindest zwei Katalysatoreinheiten (4a, 4b) sowie einem Brenner (6), dessen Abluft den Katalysatoreinheiten über Rohrleitungen (7a, 7b) zuführbar ist, wobei der Brenner (6) zumindest zwei Katalysatoreinheiten (4a, 4b) mit Brennerabluft versorgt und die vom Brenner (6) zu den Katalysatoreinheiten (4a, 4b) führenden Rohrleitungen (7a, 7b) zumindest bei Brennerstillstand nicht miteinander in Verbindung stehen.

2. Abgasanlage nach Anspruch 1,
dadurch gekennzeichnet, daß vom Brennerausgang separate Rohrleitungen (7a, 7b) zu den Katalysatoreinheiten (4a, 4b) führen und in zumindest einer der Rohrleitungen (7a, 7b) ein schaltbares Absperrorgan (8a, 8b) vorgesehen ist.

3. Abgasanlage nach Anspruch 2,
dadurch gekennzeichnet, daß die Betätigung des Absperrorganes (8a, 8b) aufgrund von Signalen einer zentralen Steuerungselektronik erfolgt.

4. Abgasanlage nach einem der vorangegangenen Ansprüche,
dadurch gekennzeichnet, daß in den Rohrleitungen (7a, 7b) Rückschlagventil-Vorrichtungen vorgesehen sind.

## Claims

1. A multi-flow exhaust system for an internal combustion engine comprising at least two catalyser units (4a, 4b) and a burner (6), the exhaust air from which can be supplied to the catalyser unit via pipes (7a, 7b), wherein the burner (6) supplies exhaust air to at least two catalyser units (4a, 4b) and the pipes (7a, 7b) leading from the burner (6) to the catalyser units (4a, 4b) are not connected to one another, at least when the burner is inoperative.

2. An exhaust system according to claim 1,
characterised in that separate pipes (7a, 7b) lead from the burner outlet to the catalyser units (4a, 4b) and a switchable throttle means (8a, 8b) is provided in at least one pipe (7a, 7b).

3. An exhaust system according to claim 2,
characterised in that the throttle means (8a, 8b) operates on the basis of signals from a central electronic control unit.

4. An exhaust system according to any of the preceding claims,
characterised in that non-return valve devices are provided in the pipes (7a, 7b).

## Revendications

1. Système de gaz d'échappement à flux multiples d'un moteur à combustion interne comportant au moins deux unités de catalyse (4a, 4b) ainsi qu'un brûleur (6) dont l'air de combustion est fourni aux unités de catalyse par des conduites (7a, 7b), le brûleur (6) alimentant en air de combustion au moins deux unités de catalyse (4a, 4b) et les conduites (7a, 7b) partant du brûleur (6) vers les unités de catalyse (4a, 4b) ne communiquant pas au moins pendant que le brûleur est arrêté.

2. Système d'échappement selon la revendication 1,
caractérisé en ce que
des conduites (7a, 7b) séparées relient la sortie du brûleur aux unités de catalyse (4a, 4b) et un organe d'arrêt commutable (8a, 8b) est prévu dans au moins l'une des conduites (7a, 7b).

3. Système d'échappement selon la revendication 2,
caractérisé en ce que
l'actionnement des organes d'arrêt (8a, 8b) se fait avec les signaux d'un circuit électronique de commande central.

4. Système d'échappement selon l'une des revendications précédentes,
caractérisé en ce que
des dispositifs à clapets antiretour sont prévus dans les conduites (7a, 7b).
